# EUROPEAN PATENT APPLICATION

(11) **EP 2 463 244 A2**
(43) Date of publication of application: **13.06.2012**
(21) Application number: 10806606.9
(22) Date of filing: 20.07.2010
(51) Int. Cl.: C03B 18/02

(54) **ELECTRICALLY CONDUCTIVE BASE PLATE AND A PRODUCTION METHOD FOR THE SAME**

(30) Priority: 07.08.2009 KR 20090072682; 06.07.2010 KR 20100064954
(71) Applicant: LG Chem, Ltd., Youngdungpo-gu Seoul 150-721 (KR)
(72) Inventor: PARK, Jong-Wuk, Seongnam-si Gyeonggi-do 461-801 (KR); KIM, So-Won, Daejeon 302-831 (KR); KIM, Sang-Ho, Daejeon 305-761 (KR); CHOI, Hyeon, Daejeon 305-761 (KR); CHUN, Sang-Ki, Daejeon 305-500 (KR)
(74) Representative: Goddar, Heinz J.
(86) International application number: PCT/KR2010/004738
(87) International publication number: WO 2011/016631

(57) **Abstract**

The present disclosure discloses a conductive substrate with a conductive pattern formed on a float glass and a method for manufacturing the same, which can prevent a yellowing phenomenon from occurring in the float glass during firing of the conductive substrate. The method for manufacturing the conductive substrate according to the present disclosure includes manufacturing a float glass by injecting molten glass onto a molten tin contained in a float bath, removing a top face of the float glass not contacting the molten tin, by a predetermined thickness, and forming a conductive pattern on the top face of the float glass, which was removed by a predetermined thickness.

## Description

### CROSS-REFERENCE TO RELATED APPLICATION

This application claims priority under 35 USC 119(a) to Korean Patent Application No. 10-2009-0072682 filed in the Republic of Korea on August 07, 2009 and Korean Patent Application No. 10-2010-0064954 filed in the Republic of Korea on July 06, 2010, the entire contents of which are incorporated herein by reference.

### TECHNICAL FIELD

The present disclosure relates to a conductive substrate with a conductive pattern formed on a float glass and a method for manufacturing the same, and more particularly, to a conductive substrate and a method for manufacturing the same, which can prevent a yellowing phenomenon from occurring in the float glass during firing of the conductive substrate.

### BACKGROUND ART

Generally, flat glass widely used as a conductive substrate is manufactured by a float process. Glass manufactured by the float process is commonly called a float glass.

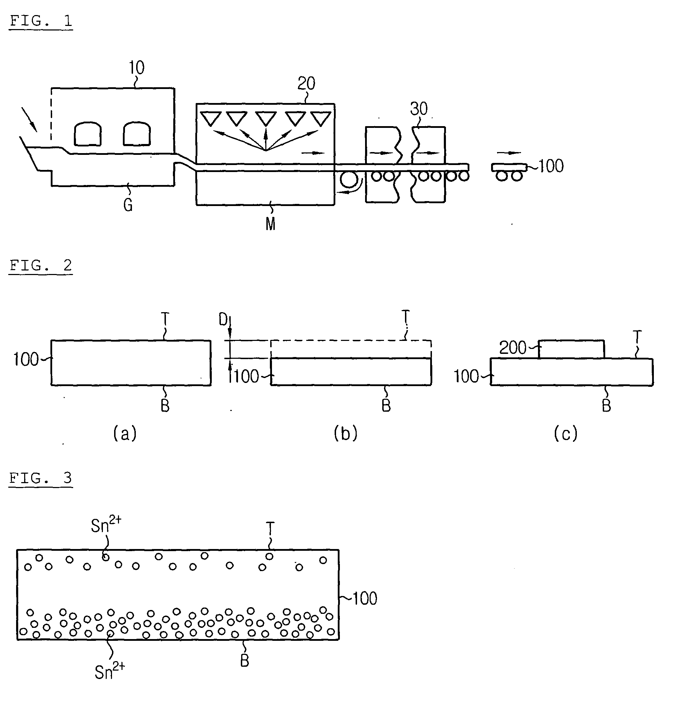

FIG. 1 is a schematic diagram showing a conventional method for manufacturing a float glass by a typical float process.

Referring to FIG. 1, a conventional method for manufacturing a float glass is performed with a melting furnace 10, a float bath 20, and an annealing furnace 30. According to this conventional method, a raw glass material is fed into the melting furnace 10 to form a molten glass G. The formed molten glass G is injected into the float bath 20. Here, molten metal M such as molten tin (Sn) or molten tin alloy at 600 to 1,050°C is contained in the float bath 20. A reducing atmosphere including hydrogen and/or nitrogen gas is created over the molten metal M to prevent oxidation of the molten metal M. When the molten glass G is continuously fed onto the molten metal M contained in the float bath 20, the molten glass G having a viscosity and weight lower than those of the molten metal M floats and spreads on the molten metal M and flows to the downstream of the float bath 20. In this process, the molten glass G reaches an equilibrium thickness according to its own surface tension and gravity, and a glass strip or ribbon solidified to a certain degree is formed. The molten glass ribbon is pulled toward the annealing furnace by a roller adjacent to an outlet of the float bath 20. The glass cooled in the annealing furnace is cut into an appropriate size and completes as a float glass product 100.

Likewise, to manufacture glass by the float process, a float bath 20 containing molten metal M, particularly molten tin, is used and so tin components are present in the float glass 100. That is, the bottom face of the float glass 100 directly contacts the molten tin in the float bath 20, and thus the tin component may penetrate the float glass 100 through the bottom face. Also, by the atmosphere in the float bath 20, the tin component of the molten tin may also penetrate the glass 100 through the top face of the float glass 100. The tin component penetrating the float glass 100 may diffuse, and thus 1 to 1,000 ppm or more of the tin component may be contained in the float glass 100.

However, in a state where the tin component is diffused into the float glass 100, if a conductive paste such as a silver paste is printed on the surface of the float glass 100 and then fired, a yellowing phenomenon may occur in the float glass 100.

More specifically, during the time the float glass 100 is being manufactured on the molten tin, tin (Sn⁰) is oxidized by oxygen that is present in a very small amount and penetrates the glass in the form of Sn²⁺ through an ion exchange reaction with Na+ in the glass. Here, the penetration rate of Sn²⁺ is much higher than that of Sn⁰ or Sn⁴⁺.

However, Sn²⁺ that starts to penetrate like the above may convert into Sn⁴⁺ through an oxidation-reduction reaction with Fe³⁺ present in the glass (Journal of Non-Crystalline Solids, 2001, 282, 188).

As such, the tin component on the surface of the float glass 100 is substantially present in the form of Sn²⁺ and a very small amount of tin component is present in the form of Sn⁰ or Sn⁴⁺. Here, in the case of a soda lime glass, the diffusion depth of Sn²⁺ may be up to about 20 um on the basis of the glass surface contacting the molten tin. (J. Noncryst. Solids, 2000, 265, 133-142).

When the conductive pattern is formed by a conductive paste on the surface of the glass, on which Sn²⁺ is diffused, and high temperature firing is performed to fix the conductive pattern, Sn²⁺ that is diffused on the surface of the glass reacts with ions of metal powder in the conductive paste generated during the firing process. For example, in the case Ag⁺ is the ion of the metal powder, by using (Ag) powder as the metal powder, Sn²⁺ reacts with Ag⁺ according to the following reaction Formula (1).

Reaction Formula (1) Sn²⁺ + 2Ag⁺ → Sn⁴⁺ + 2Ag⁰; nAg⁰ ↔ (Ag⁰)ₙ

By the above reaction, Ag⁺ is reduced to Ag⁰ colloid particles and discolored to a yellowish brown color, which is called a yellowing phenomenon.

The yellowing phenomenon not only occurs in the silver powder but may also occur in a conductive paste containing another metal powder. A representative example of another metal powder used as the conductive paste may include copper powder. In the case where a conductive pattern is formed of a conductive paste containing the copper powder, copper may react with the tin component of a molten tin according to the following Reaction Formula (2) and may have a ruby color.

Formula (2) Sn²⁺ + 2Cu⁺ → Sn⁴⁺ + 2Cu⁰; nCu⁰ ↔ (Cu⁰)ₙ

The ruby color shows an absorption spectrum at about 450 nm by free copper ions and at about 570 nm by (Cu0)ₙ nanocrystal on a spectrum (*ref.* J. Noncryst. Solids, 2006, 352, 3910-3913).

As such, the yellowing phenomenon may occur due to the tin component contained in the float glass 100 during the manufacturing of the conductive substrate, and the yellowing phenomenon may cause a reduction in transmittance of the float glass 100. As a result, the quality of the float glass 100 and the conductive substrate using the float glass 100 may deteriorate.

### DISCLOSURE

### Technical Problem

The present disclosure is designed to solve the problems of the prior art, and therefore it is an object of the present disclosure to provide a conductive substrate and a method for manufacturing the same, in which a yellowing phenomenon does not occur in a float glass even when a conductive pattern is first formed on the float glass manufactured by a float process and then undergoes a firing process.

Other objects and advantages of the present disclosure will be understood by the following description and become more apparent from the embodiments of the present disclosure, which are set forth herein. It will also be apparent that objects and advantages of the present disclosure can be embodied easily by the means defined in claims and combinations thereof.

### Technical Solution

In one aspect, a method for manufacturing a conductive substrate according to the present disclosure includes: manufacturing a float glass by injecting molten glass onto a molten tin contained in a float bath; removing a top face of the float glass not contacting the molten tin, by a predetermined thickness; and forming a conductive pattern on the top face of the float glass, which was removed by a predetermined thickness.

Preferably, in the removing of the top face of the float glass, the top face of the float glass is removed by a thickness of 5 um or less.

Also preferably, the removing of the top face of the float glass is performed by grinding, lapping, polishing, compounding polishing, plasma etching, or ion beam etching.

Also preferably, the removing of the top face of the float glass is performed by wet etching or dry etching.

Further preferably, the wet etching is performed using an etching solution comprising at least one selected from the group consisting of hydrofluoric acid, hydrochloric acid, sulfuric acid, and nitric acid.

Also preferably, in the forming of the conductive pattern, the conductive pattern is formed by printing a conductive paste by offset printing, inkjet printing, screen printing, or gravure printing.

Further preferably, the conductive paste comprises at least one selected from the group consisting of copper, silver, gold, iron, nickel, and aluminum.

Also preferably, the method further includes firing the float glass after the forming of the conductive pattern.

In another aspect, a method for manufacturing a float glass according to the present disclosure includes: forming a glass ribbon by injecting molten glass onto a molten tin contained in a float bath; cooling the glass ribbon outside the float bath; and removing a top face of the cooled glass ribbon not contacting the molten tin during the forming of the glass ribbon, by a predetermined thickness.

Preferably, in the removing of the top face, the top face of the cooled glass ribbon is removed by a thickness of 5 um or less.

In another aspect, a conductive substrate according to the present disclosure includes: a float glass manufactured by injecting molten glass onto a molten tin contained in a float bath and having a top face not contacting the molten tin removed by a predetermined thickness; and a conductive pattern formed on the top face of the float glass.

Preferably, the top face of the float glass is removed by a thickness of 5 um or less.

In another aspect, a display device according to the present disclosure includes the above conductive substrate.

In another aspect, a float glass according to the present disclosure is manufactured by injecting molten glass onto a molten tin contained in a float bath and having a top face not contacting the molten tin removed by a predetermined thickness.

Preferably, the predetermined thickness is 5 um or less.

### Advantageous Effects

According to the present disclosure, the tin component is removed from the float glass manufactured by a float process by cutting a region where the tin component is diffused. Thus, when a conductive pattern is first formed on the float glass and then fired, it is possible to prevent a yellowing phenomenon from occurring in the float glass.

Particularly, according to the present disclosure, the float glass is divided into a bottom face, which directly contacts the molten tin in the float bath, and a top face, which does not directly contact the molten tin, such that the top face of the float glass is removed by a predetermined thickness. The amount of tin component diffused in the top face of the float glass is smaller than that in the bottom face which directly contacts the molten tin. Thus, when the top face of the float glass is cut, it is possible to substantially remove the tin component that causes the yellowing phenomenon even when the top face of the float glass is removed by a small thickness, for example, a thickness of 5 um or less. Moreover, it is sufficient enough to just remove the float glass by a small thickness, thereby making it possible to significantly reduce the cost and time required to cut the float glass in order to remove the tin component.

As such, when the top face of the float glass is removed by a predetermined thickness from the entire top face of the float glass, in which the tin component is diffused, and a conductive pattern is formed on the resulting top face of the float glass, it is possible to efficiently prevent the yellowing phenomenon from occurring even when the float glass undergoes a firing process at a high temperature as well as at a low temperature.

As a result, it is possible to prevent a reduction in transmittance of the float glass due to the yellowing phenomenon, and thus it is possible to significantly improve the yield and quality of the float glass and a conductive substrate using the same.

### DESCRIPTION OF DRAWINGS

Other objects and aspects of the present disclosure will become apparent from the following descriptions of the embodiments with reference to the accompanying drawings in which:
FIG. 1 is a schematic diagram showing a conventional method for manufacturing a float glass by a typical float process;
FIG. 2 is a schematic diagram showing the structure of a conductive substrate in accordance with a preferred embodiment of the present disclosure;
FIG. 3 is a schematic diagram showing a state in which a tin component is contained in a float glass manufactured by a float process;
FIG. 4 is a schematic flowchart showing a method for manufacturing a conductive substrate in accordance with a preferred embodiment of the present disclosure;
FIG. 5 is a schematic flowchart showing a method for manufacturing a float glass in accordance with a preferred embodiment of the present disclosure; and
FIG. 6 is a graph showing the transmittance of a conductive substrate in the Examples in accordance with a preferred embodiment of the present disclosure and in the Comparative Examples.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the spirit and scope of the disclosure.

A conductive substrate according to the present disclosure includes a float glass manufactured by a float process and having a top face removed by a predetermined thickness and a conductive pattern disposed on the top face of the float glass.

FIG. 2 is a schematic diagram showing the structure of a conductive substrate in accordance with a preferred embodiment of the present disclosure.

Like a typical float glass, the float glass 100 is manufactured by a float process as shown in FIG. 1. The float glass 100 manufactured by the float process is a flat glass whose cross-section may be shown as in (a) of FIG. 2. The float glass 100 may have a thickness of 0.5 to 5 mm, but the present disclosure is not particularly limited to the thickness. Moreover, the composition of the floating glass 100 may vary.

After the float glass 100 is manufactured by the float process in the above manner, its top face T is removed by a predetermined thickness D as shown by the dotted line in (b) of FIG. 2. Here, the top face T of the float glass 100 is a surface that does not directly contact the molten tin contained in a float bath when the float glass 100 is manufactured by the float process. That is, the float glass 100 is manufactured by floating the molten glass on the molten tin contained in the float bath. Here, a bottom face B of the float glass 100 directly contacts the molten tin, whereas, the top face T does not directly contact the molten tin. Thus, according to the present disclosure, the top face T of the float glass 100, which does not directly contact the molten tin, is removed by a predetermined thickness D.

In the present disclosure, the reason that the top face T of the float glass 100 is removed by a predetermined thickness D, and not the bottom face D, is because there is a difference in the amount of tin component between the bottom face B and the top face T of the floating glass 100.

FIG. 3 is a schematic diagram showing a state in which the tin component is included in the float glass 100 manufactured by the float process. As mentioned above, the tin component in the form of Sn⁰ and Sn⁴⁺ may be included in the glass manufactured by the float process, but since the tin component mainly included is Sn²⁺, only Sn²⁺ is shown in FIG. 3.

Referring to FIG. 3, since the bottom face B of the float glass 100 directly contacts the molten tin in the float bath, the bottom face B includes a greater amount of tin component. On the contrary, the top face T of the float glass 100 does not directly contact the molten tin, and the tin component can penetrate the top face T only by the atmosphere of the float bath. As a result, the top face T contains a smaller amount of tin component.

In the float glass 100 included in a conductive substrate according to the present disclosure, the bottom face B of the float glass 100, in which a greater amount of tin component is diffused, is not removed, but the top face T, in which a small amount of tin component is diffused, is removed as shown by the dotted line in FIG. 2. Accordingly, when a conductive pattern 200 is formed thereon, it is possible to achieve the effect of substantially removing the tin component that may cause a yellowing phenomenon, even if a much smaller thickness is cut.

Preferably, the top face T of the float glass 100 is removed by a thickness of 5 um or less.

When the float glass 100 is manufactured by the float process, the tin component can be diffused up to a depth of 20 um or more in the bottom face B of the float glass 100, whereas, the tin component is diffused only up to a depth of 5 um or less in the top face T of the float glass 100. The top face T of the float glass 100 of the conductive substrate according to the present disclosure is removed in the above-described manner, and thus it is possible to prevent the yellowing phenomenon even when the top face T is removed by a thickness of 5 um or less.

As such, according to the present disclosure, the float glass 100 may be removed by just cutting a small thickness, and thus it is possible to significantly reduce the cost and time required to remove the tin component so as to prevent the yellowing phenomenon.

As shown in (c) of FIG 2, the conductive pattern 200 is formed on the top face T of the float glass 100 which is removed by a predetermined thickness. Here, the conductive pattern 200 may be formed of a conductive paste including at least one selected from the group consisting of copper, silver, gold, iron, nickel, and aluminum as a conductive material.

The conductive substrate according to the present disclosure may be used as a heating element or an electromagnetic wave shielding filter. Accordingly, the conductive pattern 200 may be a conductive heating pattern or an electromagnetic wave shielding conductive pattern 200. However, the present disclosure is not particularly limited to the type of the conductive pattern 200.

Here, the heating element may be used as a glass for buildings or vehicles. For example, the heating element may be used as a window for buildings or vehicles in which the conductive pattern generates heat when power is applied thereto. When the heating element is used as the glass for buildings or vehicles, a separate glass substrate may be further included.

The electromagnetic wave shielding filter may further include a ground. Here, the ground may be provided on the top face T of the float glass 100, which is cut by a predetermined thickness to remove the tin component, and may be disposed to surround the circumference of the conductive pattern.

Moreover, the electromagnetic wave shielding filter may be included in an optical filter.

Here, the optical filter may further include a functional film. Examples of the optical filter may include an anti-reflective film, a near-infrared ray shielding film, and a color compensation film.

As such, when the functional film is further included, the optical filter may include at least one selected from the group consisting of the electromagnetic wave shielding filter, the anti-reflective film, the near-infrared ray shielding film, and the color compensation film. Moreover, the optical filter may further include other types of functional films according to the design specifications in addition to the above-mentioned functional films.

A display device according to the present disclosure may include the above-described conductive substrate. Particularly, the display device according to the present disclosure may include a conductive shielding filter as the conductive substrate. Here, an electromagnetic wave shielding filter may be independently attached to the display device, or an optical filter including an electromagnetic wave shielding filter may be attached to the display device.

As such, the conductive substrate according to the present disclosure may be included in various types of display devices such as plasma display panels (PDPs), liquid crystal displays (LCDs), cathode-ray tube (CRTs), etc.

Meanwhile, the plasma display panel may include two panels. In this case, the electromagnetic wave shielding filter according to the present disclosure may be attached to one side of the panel. Moreover, the plasma display panel may further include at least one functional film in addition to the electromagnetic wave shielding filter.

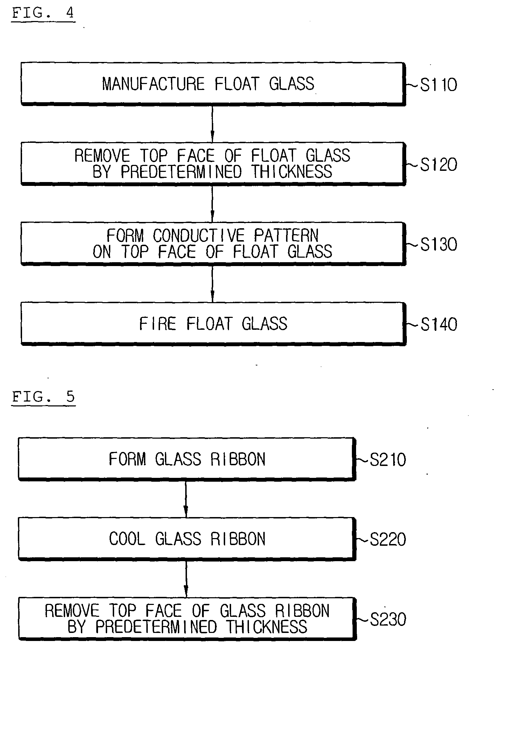

FIG. 4 is a schematic flowchart showing a method for manufacturing a conductive substrate in accordance with a preferred embodiment of the present disclosure.

Referring to FIG. 4, according to the method for manufacturing the conductive substrate of the present disclosure, a float glass 100 is manufactured by a typical float method (S110). That is, as shown in FIG. 1, the float glass 100 is manufactured by injecting the molten glass on a molten tin contained in a float bath to float thereon. The tin component is contained in a top face T and a bottom face B of the float glass 100.

Next, the top face T of the float glass 100, which does not directly contact the molten tin in the float bath, is removed by a predetermined thickness D (S120). Here, the reason that the top face T of the float glass 100 is removed in step S120, instead of the bottom face B which directly contacts the molten tin in the float bath, has already been described above.

Here, in step S120, it is preferred that the top face T of the float glass 100 is removed by a thickness of 5 um or less. In the method for manufacturing the conductive substrate according to the present disclosure, the top face T of the float glass 100, in which a smaller amount of tin component is diffused, is cut and removed, and thus it is possible to efficiently remove the tin component that causes the yellowing phenomenon, even though the top face T is removed by a thickness of 5 um or less. On the contrary, if the bottom face B of the float glass 100 is cut, the bottom face B of the float glass 100 has to be removed by a greater thickness, e.g., a thickness of 30 um or more to substantially remove the tin component that causes the yellowing phenomenon. In this case, not only does it require much more cost and time to cut the float glass 100, the thickness of the float glass 100 is further reduced.

Meanwhile, step S120 may be performed by grinding using a grinder, lapping, polishing, compounding polishing, plasma etching, or ion beam etching.

Moreover, in step S120, the top face T of the float glass 100 in which the tin component is diffused may be removed by a chemical method or a physical method. Typically, in step S120, the top face T may be removed by a wet etching process or a dry etching process.

Here, the wet etching process may be performed using an etching solution containing at least one selected from the group consisting of hydrofluoric acid, hydrochloric acid, sulfuric acid, and nitric acid. For example, the etching solution may be prepared by mixing 50% acidic solution containing 95% HCL and 5% HF with 50% deionized water.

Moreover, when an etching solution containing HF is used, the etching solution may contain 1 to 90 wt% HF such as in HF: H₂O and in HF:HCl:H₂O.

After the top face T of the float glass 100 is removed by a predetermined thickness, a conductive pattern 200 is formed on the top face T of the float glass 100 (S130).

Preferably, in step S130, the conductive pattern 200 may be formed by printing a conductive paste by offset printing, inkjet printing, screen printing, or gravure printing.

More preferably, the conductive paste may include at least one metal powder selected from the group consisting of copper, silver, gold, iron, nickel, and aluminum as a conductive material.

Moreover, the conductive paste may further include an organic binder and/or a glass frit in addition to the above-mentioned conductive materials.

Preferably, the organic binder may be volatilized during a firing process. When such an organic binder is included in the conductive paste, the printing process of the conductive paste can be more facilitated. Here, examples of the organic binder may include polyacrylic resin, polyurethane resin, polyester resin, polyolefin resin, polycarbonate resin, cellulose resin, polyimide resin, polyethylene naphthalate resin, and modified epoxy, but the present disclosure is not limited thereto.

When the conductive paste further includes the glass frit, it is possible to increase the adhesion between the conductive paste and the float glass 100. Here, the glass frit may be any one of glass frits well known in the art, and the present disclosure is not particularly limited to the type of the glass frit.

Moreover, the conductive paste may further include a solvent. Examples of the solvent may include butyl carbitol acetate, carbitol acetate, cyclohexanone, cellosolve acetate, and terpineol, but the present disclosure is not particularly limited to the type of the solvent.

For example, the conductive paste may be prepared by dispersing a conductive material, an organic binder, and a glass frit in a solvent. More specifically, an organic binder resin solution is prepared by dissolving an organic binder in a solvent, a glass frit is added to the resulting mixture, a metal powder such as copper, silver, gold, iron, nickel, or aluminum powder as conductive material is added and mixed to the resulting mixture, and then the resulting mixture of the metal powder and the glass frit is uniformly dispersed by a three-roll mill, thereby preparing the conductive paste.

In the present disclosure, when the conductive paste including the conductive material, the organic binder, the glass frit, and the solvent is used, the conductive paste may contain 50 to 90 wt% conductive material, 1 to 20 wt% organic binder, 0.1 to 10 wt% glass frit, and 1 to 20 wt% solvent.

Meanwhile, as shown in FIG. 4, the method for manufacturing the conductive substrate may further include firing the conductive pattern 200 formed on the top face T of the float glass 100 (S140).

Here, the firing temperature may be 400 to 700°C.

Particularly, when the glass frit is contained in the conductive paste and the firing is performed at a temperature of 400 to 700°C, the glass frit is softened to increase the adhesion between the conductive pattern 200 and the float glass 100.

Otherwise, if the firing is performed at a temperature of 400°C or lower, the metal powder such as the silver component, for example, contained in the conductive paste may melt and fuse to the glass 100, which is problematic. Moreover, when the glass frit is contained in the conductive paste, the glass frit may not completely melt, and the organic matter may not be removed, thereby reducing the adhesion between the silver and the glass.

When the firing is performed at a temperature of 700°C or higher, a deformation of the float glass 100 such as a strain point due to bending or unevenness of the surface of the float glass 100 may occur, and thus the deformed float glass 100 may not be suitable for display devices.

The method for manufacturing the conductive substrate according to the present disclosure may further include blackening the conductive pattern 200 formed on the top face T of the float glass 100.

When the conductive paste including the metal powder is fired at a high temperature, metallic luster is exhibited to reduce the visibility due to the reflection of light. However, when the conductive pattern 200 is blackened, this problem can be solved. In order to blacken the conductive pattern 200, a blackening material may be added to the conductive paste for forming the pattern, or the conductive paste may be blackened after printing and firing.

Examples of the blackening material added to the conductive paste may include metal oxide, carbon black, carbon nanotubes, black pigment, colored glass frit, etc. Here, the conductive paste may preferably include 50 to 90 wt% conductive heating material, 1 to 20 wt% organic binder, 1 to 10 wt% blackening material, 0.1 to 10 wt% glass frit, and 1 to 20 wt% solvent.

When the blackening treatment is performed after the firing process, the conductive paste may preferably include 50 to 90 wt% conductive material, 1 to 20 wt% organic binder, 0.1 to 10 wt% glass frit, and 1 to 20 wt% solvent. The blackening treatment after the firing process may be performed by immersing the conductive pattern in an oxidizing solution, for example, a solution containing Fe or Cu ions, immersing the conductive pattern in a solution containing halogen ions such as chloride ions, immersing the conductive pattern in hydrogen peroxide or nitric acid, or processing the conductive pattern using a halogen gas.

Meanwhile, according to the present disclosure, after the float glass 100 is manufactured, the top face T of the float glass 100 may be removed during the process of manufacturing the conductive substrate. Alternatively, the top face T of the float glass 100 may be removed during the process of manufacturing the float glass 100. That is, according to the present disclosure, a finished product of the float glass 100 may be cut and used to manufacture the conductive substrate, or a finished product of the float glass 100 from which the top face T is removed may be used to manufacture the conductive substrate.

The float glass 100 according to the present disclosure is manufactured by the float process, in which the molten glass is injected onto the molten tin contained in the float bath, and the top face T of the float glass 100, which does not directly contact the molten tin, is removed by a predetermined thickness D.

Here, the top face T of the float glass 100 may be removed by a thickness of 5 um or less.

FIG. 5 is a schematic flowchart showing a method for manufacturing a float glass in accordance with a preferred embodiment of the present disclosure.

Referring to FIG. 5, according to the method for manufacturing the float glass of the present disclosure, a glass ribbon is formed by injecting molten glass onto a molten tin contained in a float bath (S210). Next, the glass ribbon formed in the float bath is cooled outside the float bath (S220), and then the top face T of the cooled glass ribbon, which does not directly contact the molten tin, is removed by a predetermined thickness (S230).

Here, in step S230, the top face T of the glass ribbon may be removed by a thickness of 5 um or less.

Moreover, step S230 may be performed by grinding, lapping, polishing, compounding polishing, plasma etching, or ion beam etching.

Furthermore, step S230 may be performed by wet etching or dry etching.

Next, the present disclosure will be described in more detail with reference to Examples and Comparative Examples. That is, the effect of preventing the yellowing phenomenon when the conductive substrate is prepared using the float glass 100 whose top face T is removed by a predetermined thickness D will be examined through the Examples and the Comparative Examples. The Examples of the present disclosure may, however, be embodied in many different forms and should not be construed as limited to the Examples set forth herein; rather, the Examples are provided so that this disclosure will be thorough and complete, and will fully convey the concept of the present disclosure to those skilled in the art.

### EXAMPLE

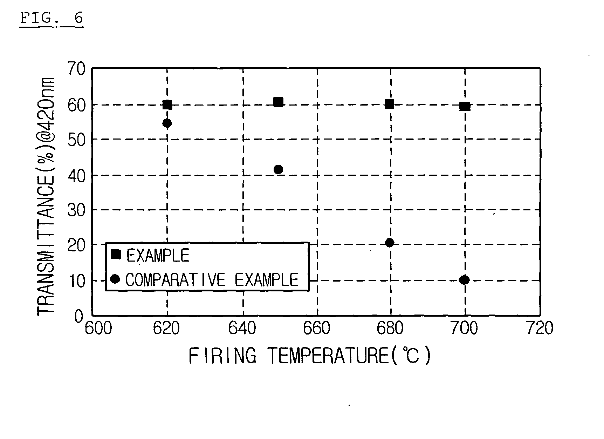

As an Example according to the present disclosure, four pieces of float glass having the same size were prepared. The top face of each float glass was etched using an etching solution containing HF and H₂O in a weight ratio of 1:10 so as to cut the top face of the float glass by a thickness of about 4.2 um. Next, a conductive pattern was formed on each float glass, whose top face was removed, using a mask of a mesh pattern and Ag paste, and then the four pieces of float glass were fired at 620°C, 650°C, 680°C and 700°C, respectively. Thereafter, the transmittance of light at a wavelength of 420 nm was measured from the four pieces of float glass, and the results are shown in FIG. 6.

### COMPARATIVE EXAMPLE

As a Comparative Example for comparison with the above Example, four pieces of float glass having the same size as the above Example were prepared, and no etching was performed thereon. Like the above Example, a conductive pattern was formed on each float glass using a mask of a mesh pattern and Ag paste, and then the four piece of float glass were fired at 620°C, 650°C, 680°C and 700°C, respectively. Thereafter, the transmittance of light at a wavelength of 420 nm was measured from the four pieces of float glass, and the results are shown in FIG. 6.

Referring to FIG. 6, in the case of the conductive substrates according to the Example of the present disclosure, the transmittance of light at a wavelength of 420 nm measured from all the conductive substrates fired at 620°C, 650°C, 680°C and 700°C was 60% or higher. On the contrary, in the case of the conductive substrates according to the Comparative Example, the transmittance of light did not significantly change at a firing-temperature of 620°C, but was significantly reduced when the firing temperature was increased, compared to that of the Example of the present disclosure. The reason that the transmittance of the conductive substrates of the Comparative Example was significantly reduced when the firing temperature was increased was because the yellowing phenomenon was increased in the float glass included in the conductive substrates of the Comparative Example as the firing temperature was progressively increased from 620°C to 650°C, 680°C and 700°C. On the contrary, in the case of the conductive substrates according to the Example of the present disclosure, the yellowing phenomenon hardly occurred in the float glass, and thus there was no significant difference in transmittance even when the firing temperature was increased.

Accordingly, it can be seen from the comparison of the Example and the Comparative Example that the yellowing phenomenon can be effectively prevented when the float glass and the conductive substrate are manufactured by the method according to the present disclosure.

The present disclosure has been described in detail. However, it should be understood that the detailed description and specific examples, while indicating preferred embodiments of the disclosure, are given by way of illustration only, since various changes and modifications within the spirit and scope of the disclosure will become apparent to those skilled in the art from this detailed description.

## Claims

1. A method for manufacturing a conductive substrate, the method comprising:
manufacturing a float glass by injecting molten glass onto a molten tin contained in a float bath;
removing a top face of the float glass not contacting the molten tin, by a predetermined thickness; and
forming a conductive pattern on the top face of the float glass, which was removed by a predetermined thickness.

2. The method of claim 1, wherein in the removing of the top face of the float glass, the top face of the float glass is removed by a thickness of 5 um or less.

3. The method of claim 1, wherein the removing of the top face of the float glass is performed by grinding, lapping, polishing, compounding polishing, plasma etching, or ion beam etching.

4. The method of claim 1, wherein the removing of the top face of the float glass is performed by wet etching or dry etching.

5. The method of claim 4, wherein the wet etching is performed using an etching solution comprising at least one selected from the group consisting of hydrofluoric acid, hydrochloric acid, sulfuric acid, and nitric acid.

6. The method of claim 1, wherein in the forming of the conductive pattern, the conductive pattern is formed by printing a conductive paste by offset printing, inkjet printing, screen printing, or gravure printing.

7. The method of claim 6, wherein the conductive paste comprises at least one selected from the group consisting of copper, silver, gold, iron, nickel, and aluminum.

8. The method of claim 1, further comprising firing the float glass after the forming of the conductive pattern.

9. A method for manufacturing a float glass, the method comprising:
forming a glass ribbon by injecting molten glass onto a molten tin contained in a float bath;
cooling the glass ribbon outside the float bath; and
removing a top face of the cooled glass ribbon not contacting the molten tin during the forming of the glass ribbon, by a predetermined thickness.

10. The method of claim 9, wherein in the removing of the top face, the top face of the cooled glass ribbon is removed by a thickness of 5 um or less.

11. The method of claim 9, wherein the removing of the top face is performed by grinding, lapping, polishing, compounding polishing, plasma etching, or ion beam etching.

12. The method of claim 9, wherein the removing of the top face is performed by wet etching or dry etching.

13. A conductive substrate comprising:
a float glass manufactured by injecting molten glass onto a molten tin contained in a float bath and having a top face not contacting the molten tin removed by a predetermined thickness; and
a conductive pattern formed on the top face of the float glass.

14. The conductive substrate of claim 13, wherein the top face of the float glass is removed by a thickness of 5 um or less.

15. The conductive substrate of claim 14, wherein the conductive pattern is formed of a conductive paste comprising at least one selected from the group consisting of copper, silver, gold, iron, nickel, and aluminum.

16. A display device comprising the conductive substrate of claim 13.

17. A float glass manufactured by injecting molten glass onto a molten tin contained in a float bath and having a top face not contacting the molten tin removed by a predetermined thickness.

18. The piece of float glass of claim 17, wherein the predetermined thickness is 5 um or less.
